# EUROPEAN PATENT APPLICATION

(11) **EP 0 576 806 A1**
(43) Date of publication of application: **05.01.1994**
(21) Application number: 93107393.6
(22) Date of filing: 06.05.1993
(51) Int. Cl.: B64C 1/00, B64C 3/56

(54) **Airplane and the way of its transforming to parking position**

(30) Priority: 30.06.1992 SU 5050050
(71) Applicant: AVIATIKA JOINT-STOCK COMPANY, 125284 Moskow (RU)
(72) Inventor: Jidovetsky, Kazimir Michailovich, 125130 Moscow (RU)
(74) Representative: Patentanwälte Zellentin & Partner

(57) **Abstract**

This invention belongs to aeronautical engineering sphere, particularly to two and three seat airplanes of tourist class, which can be used besides for training and sanitary purposes as well.

The achieved technical result of this invention - is the simplification of the airframe, reduction of weight, the simplification of the airplane control, the improvement of the cockpit vision, the opportunity of landing gear modification change. If the airplane is transformed to parking position - it is the minimizing of overall dimensions and the preservation of the essential members of the airframe against all possible mechanical damage during the transportation.

The airplane containes the fuselage with the cockpit 1, power plant ( which includes engine 4 and tractor propeller 5 ), tricycle landing gear with nose 6 and main 7,8 landing gear legs, and the V - tail of standard lay - out. The fuselage framework consists of four flat frames 10,11,12 and 13, lower load - bearing platform 14, four constrained beams 15,16,17 and 18, main frame 20 and fuselage tube 19. The constrained beams are rigidly connected to the fuselage tube 19 by the main frame 20 at its corners, as well as to the back flat frame 13, also at its corners. Each of the outboard wing panels 22 is fulfilled turning around on its hing unit and can be folded backward along the airplane axis. The load - bearing platform 14 is equipped with the spring attachment points 25 and 26 of the main landing gear legs 7 and 8 at the airplane configuration accordingly with tailwheel unit and nose gear leg. The wing strut 9 attachment point to the wing 22 spar 23 lies within the range 0,3 ÷ 0,4 of wing semispan.

## Description

The invention belongs to aeronautical engineering sphere, particularly to two and three seat airplanes of tourist class, wich can be used besides for training and sanitary purposes as well.

The two - seat French airplane of general aviation AVION ROBAN ATL is known and can be used by the private persons as well as by sport clubs. It is a monoplane with mid - set wing, V - tail and the nonretractable triwheeled landing gear with the nose wheel in the design. The power plant consists of IPX PAL 1300 piston engine with take - off power rated in 47 horsepower and two - bladed tractor propeller ( see The Technical information of the Central AeroHydrodynamical Institute ( CAHI ), Nº14,1984, /1/ page 13,16, fig.31 ).

The two - seat trainer aircraft CAP X is also known. It is used for civil and military pilots training. The airplane has low - set wing and nonretractable triwheeled landing gear with nose gear leg. The tail unit is of the standard lay - out. The power plant consists of MUDRI - BUSHU MB-4-80 piston engine of 80 horsepower and two - bladed propeller ( see /1/ page 17, fig.34 ).

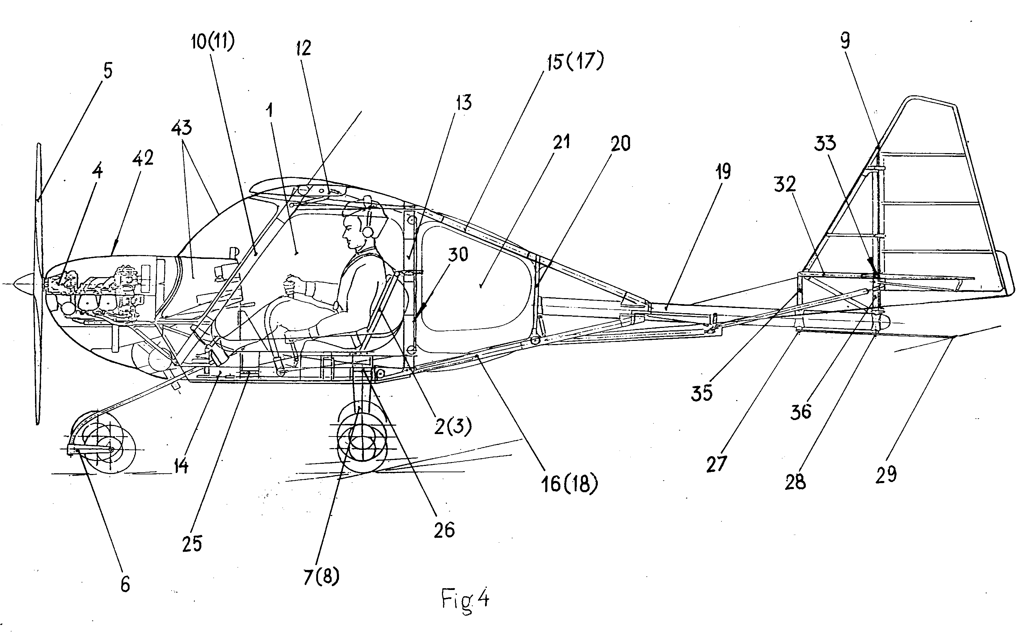

The Beachcraft Company general aviation airplane ( GA ) is also known. It is 77 "SKIPPER" airplane. The crew consists of 2 pilots, sitting side by side. This airplane has an excellent view from the cockpit. It has the low - set wing, the T - tail and nonretractable tricycle landing gear with nose-gear leg. The power plant consists of one AVCO LAYCOMING 0-235-12C piston engine of 115 horsepower, which brings the two - bladed propeller into operation ( see The Technical Information of the ( CAHI ), N 12,1983, /2/,page 3 ÷ 4, fig.4 ).

"MODEL 152" is the airplane of Cessna Company manufacture. It is the mostly close technical decision to the suggested airplane. "MODEL 152" is designed for transportation of two people. The power plant consists of one AVKO LAYCOMING 0-235-2C piston engine of the 110 horsepower and the propeller. The airplane has the high - set wing with a wing strut and the nonretractable tricycle landing gear with nose landing gear leg. The tail is fulfilled according to the standard lay - out ( see /2/ page 14 ).

Making an estimate of the technique level in existence it is worth noting that from the great variety of the GA airplanes it is difficult to choose the airplane which simultaneously corresponds to all the requirements, or at least to the majority of the requirements that can be unposed upon the airplane of this class. If an excelent view from the cockpit is provided, but the low - set wing lay - out is chosen, obviously it will be difficult to avoid the vision angles range, when the wing hinder it. Sometimes the fuselage design can be overweight, if the hight - set wing lay - out with wing - strut has been chosen. It is practically impossible to choose the airplane from the great airplanes variety of this class with the cockpit similar to the helicopter cabin and with the similar vision characteristics, for example because of the nose part of the fuselage design, where engine is mounted. As a rule, the engine cowling which coveres the airplane engine, smoothly mates with the cockpit. The engine cowling has the conditional diameter, which coincide with the cross dimention of the cockpit.

The way of transforming of the airplane with the high - wing monoplane lay - out to parking position is known. This airplane is one of the above - mentioned GA airplane class. The process of the transforming to parking position is the following: each of the outboard wing panels undocks one of its fuselage attachment points and swivels towards the tail on its second fuselage attachment point. When completely oriented along the longitudinal airplane axis, they are fixed ( see Ikarus Aviazione Sportiva, Nº3 ÷ 4, 1991, page 16-21, Avit Elyer ).

Making an estimate of this way of the transforming of the airplane to parking position it should be pointed out that this way of transforming is sufficiently simple, and yet in this case the V dihendral overall dimensions of the airplane are determined by the outboard wing panel leading edges, which are oriented along the longitudinal airplane axis now. But exactly in this case, the outboard wing panel leading edge is precisely susceptible to a high probability of damage, which is extremely undesirable.

When developping the suggested airplane, it was proposed to create easy and reliable design, which absorbs the maximum of the necessary properties which are habitual for this airplane class and which are necessary for carrying out their functions. It was important to provide this airplane with the property - to occupy the less place at the parking position the better. This immediately causes the payment for the airplane maintenance and protects the design elements at the transformed configuration while transporting.

The received technical results of this airplane may be the following:
- simplification of the design;
- weight reduction;
- simplification of the airplane control;
- improvement of vision from the cockpit, as well as,
- changing of the airplane landing gear modification ( nose landing gear leg - tailwheel unit ) in accordance with the tasks and service conditions. As far as the airplane transforming to parking position is concerned, the technical result is the following:
- preservation of the essential components of the airframe against all possible mechanical damage during the transporting;
- minimizing of the overall parameters at parking position.

The applied technical result can be provided with the following set of the essential evidences.

According to the invention, in this airplane, containing the fuselage ( with the two - seat passenger cabin, with the seat location side by side and with the dualized control system ), the power plant ( which is an assemblage of the airplane engine and the tractor propeller, which is located at the fuselage nose part ), the nonretractable spring tricycle landing gear with the nose and the main landing gear legs, the tail of the standard lay - out, and the high - set wing with the wing strut, the airplane fuselage framework is built of:
- four flat frames ( the upper, the back and the two side frames which are rigidly connected with each other forming the passenger cabin ) and the lower load - bearing platform ( which is rigidly connected with the side and the back frames, forming the passenger cabin floor );
- four constrained beams ( each of them by one end is rigidly connected with the back frame at one of its corners and by the second end fitted to the fuselage tube, which is rigidly connected by its one end with the frame wall); the frame limits the baggage compartment of the passenger cabin and in its turn is rigidly connected at its corners with four constrained beams forming the fuselage framework;
   each of the outboard panels is fulfilled rotaiting on its hing unit and can be folded backward along the airplane axis in storage; the wing is fulfilled as the one spar wing with the spar in the tube form, which is uniform in section with the fuselage tube, at which at its free end the airplane tail is mounted;
   each of the outboard wing panels is connected with the fuselage by the strut and by the two hinges ( the first one is fulfilled as a second degree hinge joining together the outboard wing panel spar and the fuselage, the second one is located at the wing airborne rib and is offsetted from the first (front) hinge along the wing chord ); the load - bearing platform is provided with the two pairs of the main spring landing gear attachment points, which are offsetted along the longitudinal axis of the airplane for the main landing gear springs fastening ( which are fulfilled demountable and rearrangable in the configuration of the last mentioned respectively with nose landing gear leg and the tailwheel unit), the nose landing gear leg is fulfilled demountable; special attachment points for the nose and tail landing gear legs fastening are fulfilled at the limit part of the fuselage tube; as this takes place, the stick controller of the right pilot is installed with the possibility of stripping; the right pilot's seat is done as a hinged seat, throwing backward along the airplane axis together with the wall of the back frame, which separates the baggage compartment from the passenger cabin, forming the longitudinally oriented cargo - passenger compartment; the attachment point of the strut to the tube - like wing spar lies within the range 0,3 ÷ 0,4 of the wing semispan.

Each half of the tailplane at the tail is fulfilled as three spatially arranged rods, hinged one to another by their one end, two of which are hinged by free ends to the load - bearing elements of the fuselage tube, with an exceeding over it and forming the horizontal carrying surface with the fabriccoverings; the first one forms an angle with the fuselage tube, the second one is normal to it, and the third rod is hinged by its free end to the fuselage tube and lies with the second one in the same transverse vertical plane.

The wing strut is fulfilled as two rods ( hinged one to another by one end, and by the free end the first one is hinged to the wing, and the second one is hinged to the fuselage ) and the bracing strut hinged by its one end to the wing and by another one hinged to the rods at their coupling.

The bracing strut is fulfilled in the V - shaped beam form, and is connected with the wing by its coming apart ends.

The second back attachment point of the wing to the fuselage is fulfilled in the form of the hinge unit.

The fuel tank is fulfilled as two wing bay - tanks, located inside the outboard wing panels ahead of the wing spar; each of them is fulfilled as a forward part of the bearing airfoil surface of the outboard wing panel.

Each of the wing bay - tanks is located along the outboard wing span, beginning with its airborne rib.

The engine compartment is confined in the extended engine cowling, extending beyond the passenger cabin, which has the body of rotation figure with the upper surface in the form of the irregular cylinder surface and with the cross section area along the whole length of the engine cowling, lesser than the cockpit cross section area; as this takes place, the frontal part cabin glazing is fulfilled spanning the engine cowling upper surface up to the level which is lower than the airplane's longitudinal datum line, in order to achieve an excellent over - the - nose vision for the pilot; the engine cowling mates with the front cabin part without the smooth airfoil fillets, but the lower cowling surface goes into the fuselage surface.

The way of the airplane transforming to parking position resides in folding the wings till they are oriented along the airplane's longitudinal axis and fixed, undocking the back hing unit of the outboard wing panels and the wing strut from the fuselage, turning the outboard wing panel on its front hinge of the second degree through 90° about the wing spar axis with its leading - edge downwards, turning the outboard wing panel on its front hinge of the second degree towards the fuselage till the outboard wing panel is oriented along the fuselage longitudinal axis, laying the leading - edge of the outboard wing panel at the tailplane and fixing it at this position, laying the strut at the passenger cabin roof and fixing it at this position, and then repeating all the above mentioned operations concerning the second outboard wing panel.

Following laying of the second strut at the passenger cabin roof, both of them are clamped to the cabin roof and between each other.

The outboard wing panel is clamped to the tailplane by the rod extending from the outboard wing panel leading edge into its associated hole at the tailplane. The struts are fixed at the passenger cabin roof in the roof strut pocket which is made for the strut clamping.

The invention is explained by the following drawings:

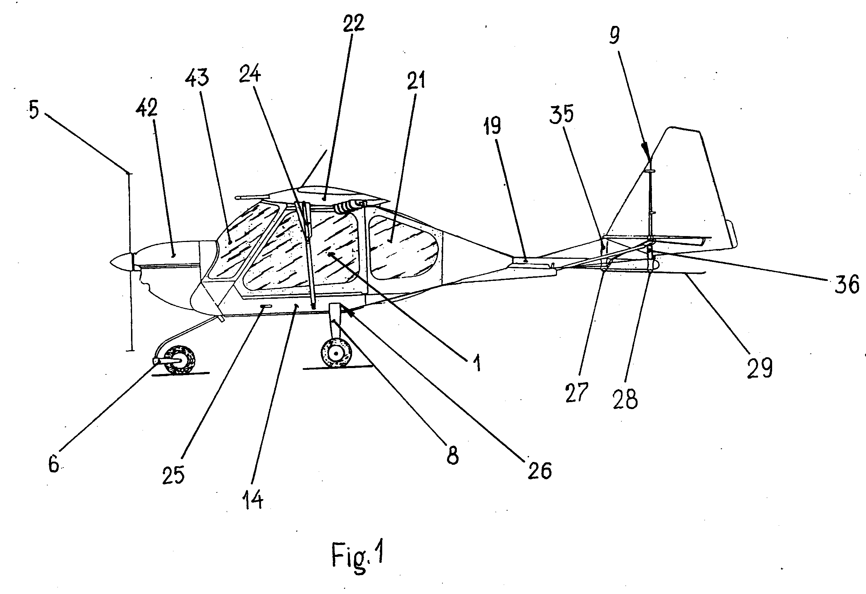

fig.1 - the airplane general view, the side view;

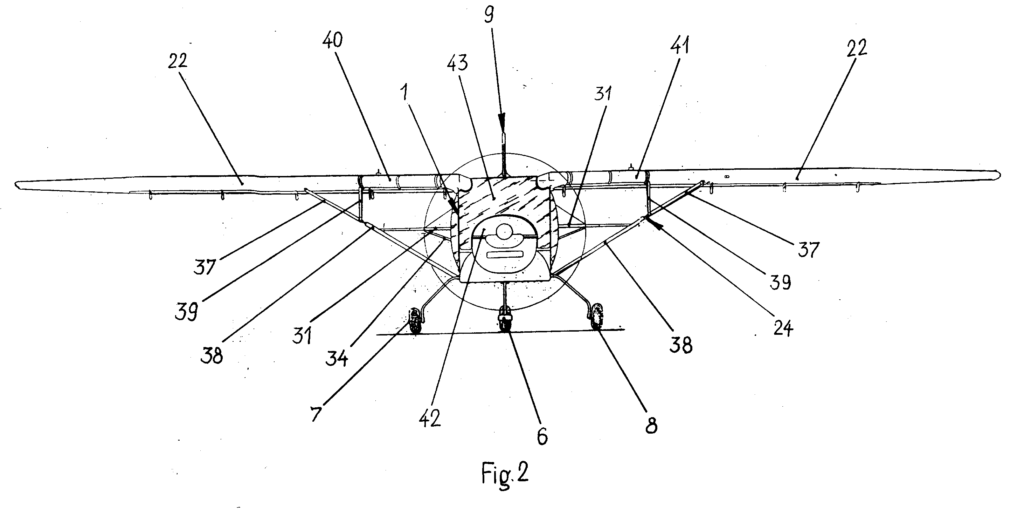

fig.2 - the airplane, the front view;

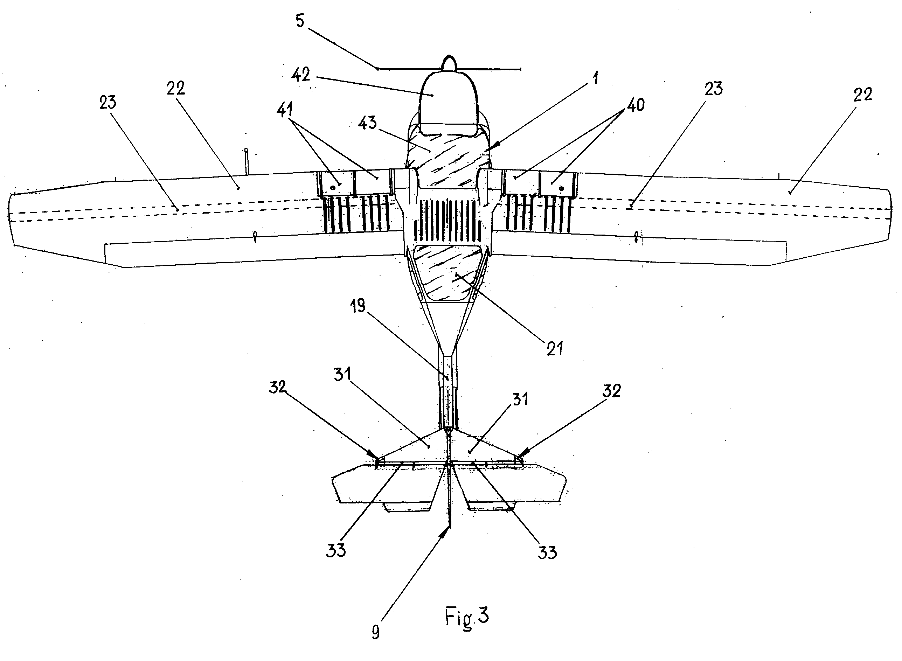

fig.3 - the airplane, the plan view;
fig.4 - the airplane layout drawing;

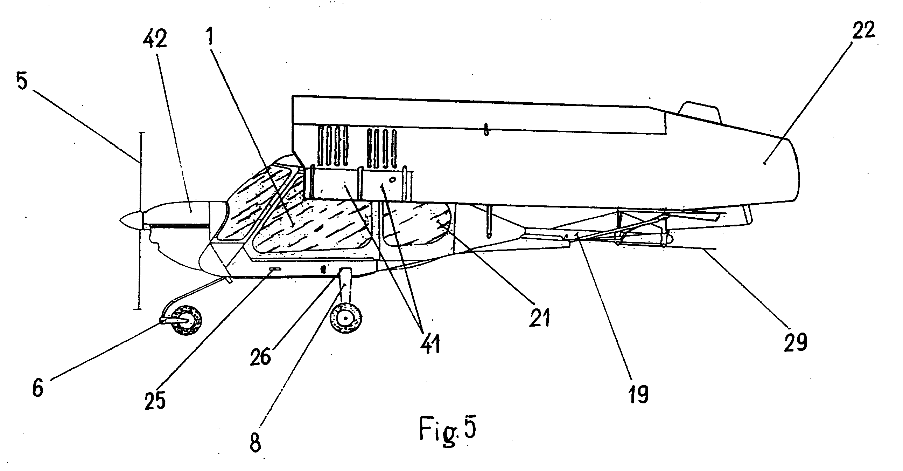

fig.5 - the airplane, transformed to parking position.

The airplane contains the fuselage with the two - seat passenger cabin 1, with the seat 2,3 location side by side and with the dualized control system. The power plant containing the airplane engine 4 and the tractor propeller 5 is located at the nose part of the fuselage. The airplane spring tricycle landing gear is nonretractable with the nose 6 and the main 7,8 landing gear legs. The airplane tail 9 is of a standard lay-out. The airplane is built according to the bracing strut high - wing monoplane lay - out. The airplane fuselage framework is built of the four flat frames ( the two side frames 10,11, the upper 12 and the bask 13 ones), which are rigidly connected with each other, forming the passenger cabin 1. The lower load - bearing platform 14 is rigidly connected with the side 10,11 and the back 13 frames, forming the passenger cabin 1 floor, and forming the part of the airplane fuselage framework. The four constrained beams 15,16,17 and 18 also form the part of the framework, each of them by one end is rigidly connected with the back frame 13 at one of it's corners and by the second end is fitted to the fuselage tube 19. The fuselage tube 19 is rigidly connected by it's one end with the main frame 20 wall, which limits the baggage compartment 21 of the passenger cabin 1. The main frame 20 is rigidly connected at its corners with four constrained beams 15,16,17 and 18 forming the fuselage framework. Each of the outboard wing 22 panels is fulfilled rotaiting on its hing unit and can be folded back - ward along the airplane axis in storage. Each of the outboard wing panels is fulfilled as the one spar wing with the spar 23 in the tube form, which is uniform in section with the fuselage tube 19. The airplane tail 9 is mounted at the fuselage tube 19 free end. Each of the outboard wing 22 panels is connected with the fuselage by the strut 24 and by the two hings ( not shown ). The first one is fulfilled as a second degree hinges joining togeather the outboard wing 22 panel spar 23 and the fuselage, the second one is located at the wing airborne rib ( not shown ) and is offsetted from the first ( front ) hinge along the wing chord. The load - bearing platform 14 is provided with the two pairs of the main spring landing gear leg 7,8 attachment points 25, 26, which are offsetted along the longitudinal axis of the airplane for the spring fastening of the main landing gear leg 7 and 8. The main landing gear legs 7 and 8 are fulfilled demountable and rearrangable from the attachment point 26 to the attachment point 25 in landing gear configuration respectively with the nose landing gear leg 6 and the tailwheel unit ( not shown ). The nose landing gear leg 6 is also fulfilled demountable. Special attachment points 27,28 for tailwheel ( not shown ) or tail bumper 29 landing gear leg fastening are fulfilled at the limit part of the fuselage tube 19. The stick controller of the right pilot ( not shown ) is installed with the possibility of stripping. The right pilot's seat ( not - shown ) is done as a hinged seat, throwing back - ward along the airplane axis togeather with the wall 30 at the back frame 13, which separates the baggage compartment 21 from the passenger cabin 1, forming the longitudinally oriented cargo - passenger compartment. The attachment point of the strut 24 to the tube - like wing 22 spar 23 lies within the range 0,3 ÷ 0,4 of the wing semispan.

Each half of the tailplane 31 at the tail 9 is fulfilled as three spatially arranged rods 32,33 and 34, hinged one to another by their one end. Two of them 32 and 33 are hinged by free ends to the load - bearing elements 35 and 36 of the fuselage tube 19, exceeding it and forming the horizontal carrying surface with the fabriccoverings The first rod 32 forms an angle with the fuselage tube 19, and the second one 33 is normal to it. The third rod 34 is hinged by it's free end to the fuselage tube 19 and lies with the second rod 33 in the same transverse vertical plane. The wing 22 strut 24 is fulfilled as two rods 37 and 38, hinged one to another by one end and by the free end the first one 37 is hinged to the wing 22 and the second one 38 is hinged to the fuselage. The bracing strut 39 is hinged by its one end to the wing 22 and by another one is hinged to the rods 37,38 at their coupling. The bracing strut, for example, can be fulfilled in the V - shaped beam form, and is connected with the wing 22 by its coming apart ends. The back outboard wing 22 panel attachment point, for example, can be fulfilled in the form of the hinge unit, or in some other way. The airplane fuel tank is fulfilled as two wing bay - tanks 40,41, which are located inside the outboard wing 22 panels, ahead of the wing spar 23, each of them is fulfilled as a forward part of the bearing airfoil surface of the outboard wing 22 panel. Each of the wing bay - tanks 40 and 41 is located along the outboard wing 22 span, beginning with its airborne rib.

The engine compartment is confined in the extended engine cowling 42, extending beyond the passenger cabin 1, which has the body of rotation figure with the upper surface in the form of the irregular cylinder surface and with the cross section area along the whole length of the engine cowling 42, lesser than the cockpit 1 cross section area. The frontal part cabin 1 glazing 43 is fulfilled spanning the engine cowling 42 upper surface up to the level which is lower than the airplane's longitudinal datum line, in order to achieve an excellent over - the - nose vision for the pilot. The engine cowling 42 mates with the front cabin 1 part without the smooth airfoil fillets. The lower cowling 42 surface smoothly mates with the lower fuselage surface.

The airplane is functioning in the following manner.

The pilot and the passenger occupy the places at the airplane cockpit 1. The special student pilot can be as an alternative to the passenger, and, for example the instructor pilot can be as an alternative to the first pilot. The passenger luggage, the tourist accessories or the sport equipment for active rest can be housed in the baggage compartment 21 in tourist, pleasure and taxi - class airplane versions. All the required things, including the instruments for the on - condition maintainance and the airplane parking can be placed in the baggage compartment 21.

Engine 4 starts, bringing the propeller 5 into operation. The airplane begins taxiing and executes the takeoff run by wheeled landing gear 6,7 and 8. When the take - off speed is achieved, the pilot takes the control stick "towards himself" deflecting the elevator and the airplane takes off. The airplane has a traditional control in the flight. The pilot controls the ailerons and the elevator by the control stick. The rudder is controlled by the rudder pedals. The availability of the dualized control system allows, for example, handing of control to the special student pilot. The cabin glazing 1, including the frontal part cabin glazing 43 provides an excellent view from the cockpit. The ease of the design, the easiness of the control, the convenience of the placement in the cockpit and an excellent view from it imparts the declared airplane individual qualities, distinguishing it from the majority of the GA airplanes of this class.

The framework of this airplane is designed in such a way, that it allows the airplane to combine the strength, the simplicity and the reliability. The flat frames 10,11,12 and 13 and the load - bearing platform 14 forms rigidly enclosed member - the volume providing the maximum safety of the crew. The wing 22 loads are transferred to the side frames 10 and 11 immediately by the attachment points of the wing 22 and by the wing strut 24. The tail 9 load is transferred by the fuselage tube 19 to the frame 20 wall, and by the constrained beams 15,16,17 and 18 again to the main frame 20 and to the back flat frame 13. In other words, the load-bearing member which is formed by the fuselage tube 19, by the main frame 20 and by the four constrained beams 15,16,17 and 18, transfers the tail 9 loard. This load - bearing member organically mechanically connected with the load - bearing framework of the cabin 1, forms the single rigid mechanically - load - bearing lay - out, but it is easy, light and reliable.

In the flight the lift force is realized at the wing 22 which is manifested as a distributed load along the wing 22 span. The wing bends under the distributed load, forming the wing 22 bending moment. Beyond that point the wing 22 experiences the concentrated loads, for example at the strut attachment points. In case of wrong or arbitrary choice of the attachment points of the strut rods 37 to the wing spar 23 the spring wing 22 line can take an unpredicted form, which causes the wing 22 strengthening and as consequent - weight increasing. On the one hand the longitudinally - cross spar 23 landing is produced by the distributed aerodynamic load and on the other - by the horizontal force component, which is transferred by the wing strut. It is known from the strength theory, that the work of the tube - like spar 23 design member is the most favourable when the initial deflection of the compressed member is close to zero. This is achieved by the purposeful location of the strut rod 37 attachment point along the wing 22 span. The fact that the optimum location of the attachment point of the strut rods 37 to the wing 22 spars 23 lies within the range of 0,3 ÷ 0,4 of the wing semispan was established by the calculations and was experimentally supported. Under this location of the attachmentpoint, the wing 22, at its length from the attachment point of the wing spar 23 to the fuselage load - bearing members up to the attachment point of the strut rod 37 to the wing spar, has the deflection which is essentially close to zero. At the length > 0,7 of the wing 22 semispan, the regular loading of the wing 22 members by the bending moment causes the wing's bending up. Under this loading conditions it is possible to avoid the strengthening of the wing 22 design without the contribution of the superfluous weight to it.

When the flight program is executed the airplane begins the landing approach. When landing any of the airplanes must be provided with an excellent over - the - nose and the side - down vision requirments. The side cabin 1 glazing, which is mounted at the side plane frames 10 and 11 with its lower edge at the pilot's foot level provides the prearranged vision for the pilot. The front part cabin 1 glazing 43 spanning the engine cowling 42 up to the level which is lower than the airplane's longitudinal datum line, is mounted between the two side frames 10,11 and provides an excellent over - the - nose and the side - down view from the cockpit. It is the governing factor when the airplane is landing, because this is precisely the viewing angle which is used by the pilots when landing. It is significant not only for the tourist purposes usage, but particularly for the original training of special student - pilots who posess lack of piloting experience. The cockpit of this airplane offers certain advantages in this. The airplane cowling in its cross section is narrower than the cockpit 1 and the frontal part cabin glazing 43 and as a consequence it is not an obstacle to the pilot's vision. And to the contrary the airplane cowling 42 and the cockpit 1 are combined in such a way that they can give an edge in the above mentioned parameter over the other airplanes of this class.

When landing the airplane is in contact with the runway surface by the airplane landing gear 6,7 and 8. The impact energy is taken up by the wheel tyres and by the nose 6 and the main 7,8 landing gear leg spings. In case of the heavy landing, for example, in the original training stage, the aerodynamic wing 22 dispersion also takes part in the absorption of the impact energy.

The airplane under discussion can be also used in the freight - passenger and the sanitary versions. The right pilot control stick is dismounted and the cover is put down on the foot pedals. Thereupon the wall 30 of the back frame 13 is thrown back and the right pilot seat is thrown to the baggage compartment 21. As a result, we get the compartment of the passenger cabin 1 and the baggage compartment 21 length. A small stretched load or the man, who must be transported to the hospital for receiving medical aid, can be situated there. The "pilot - doctor" conception which is in general use now is successfully realized at this airplane. The physician and the pilot at the same time is flying out by his airplane to the patient or victim location place with the minimum set of medical instruments in order to provide the first medical aid and to transport the patient to hospital for further medical treatment. The patient is lying at the airplane compartment, which is formed by the dismounting of the right pilot control stick, the right pilot seat and the back frame 13 wall 30. In this airplane the provision is made for the transformation of the landing gear lay - out from the tricycle landing gear with the nose landing gear leg to the tricycle landing gear with the tailwheel landing gear. At the load - bearing platform 14 the two pairs of the landing gear leg 7,8 spring attachment points 25,26 are provided. They are fulfilled demountable and rearrangable. In the airplane configuration with the nose landing gear leg 6 the landing gear 7,8 springs are fastened on to the attachment points 26, which are displaced backward from the attachment point 25 along the airplane axis. In case of necessity of the landing gear lay - out change, depending on the operation conditions, the nose landing gear leg 6 is dismounted, and main landing gear legs 7,8 are rearranged and fixed on the load - bearing platform attachment points 25. The tail bumper 29, which is mounted in the configuration with the nose landing gear leg 6, is undocked from the fuselage tube 19 attachment points 27 and 28. The tailwheel landing gear ( not shown ), which is among the airplane kit, is connected with the attachment points 27 and 28. By this means the airplane landing gear lay - out changes.The possibility of the reverse transforming of the airplane landing gear lay - out is always conserved under changes of the operation condifions ( again with the nose 6 landing gear leg ). It is realized by the rearrangement of the main landing gear legs 7,8 to the attachment points 26, by the installation of the tail bumper 29 to the attachment points 27,28 instead of the tailwheel landing gear.

The way of the airplane transforming to parking position can be illustrated in the following manner. If the need in the airplane storage should arize ( in the hangar or the special aircraft parking, which is not necessiarily long - term but also daily ) or in case of the airplane transporting necessity, the airplane can be converted in the following way. Originally the back hinge unit of one of the outboard wing 22 panels and of the wing strut 24 is undocked from the fuselage, or more specifically - the strut 24 rod 38 is undocked from the fuselage. Then the outboard wing panel is turning on its front hinge unit of the second degree though 90° about the wing spar 23 axis with its leading - edge downwards. Next, the outboard wing 22 panel is turning on its front hinge unit of the second degree towards the fuselage till the outboard wing panel is oriented along the fuselage longitudinal axis. Next, the leading - edge of the outboard wing 22 panel is put at the tailplane 31 and is fixed in this position. The wing strut 24 is also transferred to the passenger cabin 1 roof and is fixed in this position. After that, all the above mentioned operations, concerning the second outboard wing 22 panel are repeated. After putting of the second strut 24 at the passenger cabin 1 roff, both of them are clamped to the cabin roff and between each other, according to this way of the airplane transforming. The outboard wing 22 panel clamping at the tailplane 31 can be executed, for example, by the rod, extending from the outboard wing panel leading edge to its associated hole at the tailplane 31. Besides, the wing struts 24 can be fixed at the passenger cabin 1 roof in the roff strut pocket, which is made for the strut 24 clamping. Being transformed in such a way, the airplane can be towed to the special aircraft parking or to the hangar, where it would take place, which is limited by the airplane length and the tailplane 31 span. In this configuration the airplane can be transported by the special platform or can be taken in tow. It should be pointed out that this airplane posesses less probability of the main members' damage, for example, the wing, which is oriented by its leading - edge downwards, all other factors being equal with the other similar analogous airplanes being transformed to parking and transporting position.

In such a manner, the declared airplane, being the typical representative of the GA airplanes of this class, at the same time, posesses the maximum quantity of the main required qualities of the airplane of this kind. This airplane meets all the requirments for the simplicity, strength, reliability, control, function possibilities and so on. This airplane excelles all known analogous airplanes meeting the priority requirements at the totality of qualities for the airplane of this class.

## Claims

1. The airplane containing the fuselage ( with the two - seat passenger cabin, with the seat location side by side and with the dualized control system ), the power plant ( which is an assemblage of the airplane engine and the tractor propeller, which is located at the fuselage nose part ), the nonretractable spring tricycle landing gear with the nose and the main landing gear legs, the tail of the standard lay - out, and the high - set wing with the wing strut differs in that, the airplane fuselage framework is built of: the four flat frames ( the upper, the back and the two side frames which are rigidly connected with each other forming the passenger cabin ) and the lower load - bearing platform ( which is rigidly connected with the side and the back frames, forming the passenger cabin floor ); the four constrained beams ( each of them by one end is rigidly connected with the back frame at one of its corners and by the second end fitted to the fuselage tube, which is rigidly connected by its one end with the frame wall); the frame limits the baggage compartment of the passenger cabin and in its turn is rigidly connected at its corners with four constrained beams forming the fuselage framework; each of the outboard panels is fulfilled rotaiting on its hing unit and can be folded backward along the airplane axis in storage; the wing is fulfilled as the one spar wing with the spar in the tube form, which is uniform in section with the fuselage tube, at which at its free end the airplane tail is mounted; each of the outboard wing panels is connected with the fuselage by the strut and by the two hinges ( the first one is fulfilled as a second degree hinge joining together the outboard wing panel spar and the fuselage, the second one is located at the wing airborne rib and is offsetted from the first (front) hinge along the wing chord ); the load - bearing platform is provided with the two pairs of the main spring landing gear attachment points, which are offsetted along the longitudinal axis of the airplane for the main landing gear springs fastening ( which are fulfilled demountable and rearrangable in the configuration of the last mentioned respectively with nose landing gear leg and the tailwheel unit), the nose landing gear leg is fulfilled demountable; special attachment points for the nose and tail landing gear legs fastening are fulfilled at the limit part of the fuselage tube; as this takes place, the stick controller of the right pilot is installed with the possibility of stripping; the right pilot's seat is done as a hinged seat, throwing backward along the airplane axis together with the wall of the back frame, which separates the baggage compartment from the passenger cabin, forming the longitudinally oriented cargo - passenger compartment; the attachment point of the strut to the tube - like wing spar lies within the range 0,3 ÷ 0,4 of the wing semispan.

2. The airplane according to the first point differs in that, each half of the tailplane at the tail is fulfilled as three spatially arranged rods, hinged one to another by their one end, two of which are hinged by free ends to the load - bearing elements of the fuselage tube, with an exceeding over it and forming the horizontal carrying surface with the fabriccoverings; the first one forms an angle with the fuselage tube, the second one is normal to it, and the third rod is hinged by its free end to the fuselage tube and lies with the second one in the same transverse vertical plane.

3. The airplane according to the first point differs in that, the wing strut is fulfilled as two rods ( hinged one to another by one end, and by the free end the first one is hinged to the wing, and the second one is hinged to the fuselage ) and the bracing strut hinged by its one end to the wing and by another one hinged to the rods at their coupling.

4. The airplane according to the third point differs in that, the bracing strut is fulfilled in the V - shaped beam form, and is connected with the wing by its coming apart ends.

5. The airplane according to the first point differs in that,the second back attachment point of the wing to the fuselage is fulfilled in the form of the hinge unit.

6. The airplane according to the first point differs in that, the fuel tank is fulfilled as two wing bay - tanks, located inside the outboard wing panels ahead of the wing spar; each of them is fulfilled as a forward part of the bearing airfoil surface of the outboard wing panel.

7. The airplane according to the 6^{th} point differs in that, each of the wing bay - tanks is located along the outboard wing span, beginning with its airborne rib.

8. The airplane according to the first point differs in that, the engine compartment is confined in the extended engine cowling, extending beyond the passenger cabin, which has the body of rotation figure with the upper surface in the form of the irregular cylinder surface and with the cross section area along the whole length of the engine cowling, lesser than the cockpit cross section area; as this takes place, the frontal part cabin glazing is fulfilled spanning the engine cowling upper surface up to the level which is lower than the airplane's longitudinal datum line, in order to achieve an excellent over - the - nose vision for the pilot; the engine cowling mates with the front cabin part without the smooth airfoil fillets, but the lower cowling surface goes into the fuselage surface.

9. The way of the airplane transforming to parking position residing in folding the wings till they are oriented along the airplane's longitudinal axis and fixed, differs in that, the back hing unit of the outboard wing panels and the wing strut are undocked from the fuselage, the outboard wing panel is turned on its front hinge of the second degree through 90° about the wing spar axis with its leading edge downwards, the outboard wing panel is turned on its front hinge of the second degree towards the fuselage till the outboard wing panel is oriented along the fuselage longitudinal axis, the leading - edge of the outboard wing panel is put at the tailplane and is fixed at this position, the strut is put at the passenger cabin roof and is fixed at this position, and then all the above mentioned operations concerning the second outboard wing panel are repeated.

10. The way of the airplane transforming to parking position according to the 9^{th} point differs in that, after the second strut is put at the passenger cabin roof, both of them are clamped to the cabin roof and between each other.

11. The way of the airplane transforming to parking position according to the 9^{th} point differs in that, the outboard wing panel is clamped to the tailplane by the rod extending from the outboard wing panel leading edge into its associated hole at the tailplane.

12. The way of the airplane transforming to parking position according to the 9^{th} point differs in that, the struts are fixed at the passenger cabin roof in the roof strut pocket which is made for the strut clamping.
